# EUROPEAN PATENT APPLICATION

(11) **EP 4 379 520 A1**
(43) Date of publication of application: **05.06.2024**
(21) Application number: 22861672.8
(22) Date of filing: 22.08.2022
(51) Int. Cl.: G06F 3/0484, G06F 1/16, G06F 3/00, G06F 3/0481, G06F 3/14, G09F 9/30

(54) **METHOD FOR PROVIDING IMAGE, AND ELECTRONIC DEVICE SUPPORTING SAME**

(30) Priority: 26.08.2021 KR 20210113444; 27.09.2021 KR 20210127480
(71) Applicant: Samsung Electronics Co., Ltd., Suwon-si, Gyeonggi-do 16677 (KR)
(72) Inventor: KIM, Jinhyun, Suwon-si Gyeonggi-do 16677 (KR); JANG, Jongwoon, Suwon-si Gyeonggi-do 16677 (KR); LEE, Taehoon, Suwon-si Gyeonggi-do 16677 (KR); KIM, Sungoh, Suwon-si Gyeonggi-do 16677 (KR); PARK, Bongseok, Suwon-si Gyeonggi-do 16677 (KR); AHN, Donghyuk, Suwon-si Gyeonggi-do 16677 (KR)
(74) Representative: Gulde & Partner
(86) International application number: PCT/KR2022/012538
(87) International publication number: WO 2023/027463

(57) **Abstract**

An electronic device according to various embodiments disclosed herein comprises: a flexible display in which an externally exposed region decreases as the flexible display goes into the electronic device and the externally exposed region expands as the flexible display comes out of the electronic device; a camera module including an image sensor; at least one sensor; and at least one processor, wherein the at least one processor is configured to acquire an image through the entire region of the image sensor on the basis of a user input, identify the externally exposed region of the flexible display through the at least one sensor, determine, in the image, an image portion corresponding to the identified region of the flexible display, and display the determined image portion through the flexible display.

## Description

### [Technical Field]

Various embodiments of the present disclosure relate to a method for providing image and an electronic device supporting the same.

### [Background Art]

As a demand for mobile communication increases and integration of an electronic device increases, portability of the electronic device such as a mobile communication terminal can be improved, and convenience in using a multimedia function can be improved. For example, by replacing a traditional mechanical (button type) keypad with a display with a touch screen function, the electronic device can be miniaturized while retaining a function of an input device.

When using a web surfing or a multimedia function, it may be more convenient to use the electronic device that outputs a larger screen. A larger display can be mounted on the electronic device to output a larger screen, but considering the portability of the electronic device, there may be a limitation in expanding a size of the display.

Recently, development regarding a flexible display is actively progressing. The flexible display may be mounted on the electronic device in a slidable, foldable or bendable, or rollable form. The electronic device including a flexible display can provide an expanded or contracted screen depending on a need of a user.

Meanwhile, the electronic device may display, through a display, an image obtained through a camera, based on a horizontal and vertical ratio of an image (hereinafter referred to as "image aspect ratio"), which is set by an input (e.g., a user input). For example, if the aspect ratio of the image is set to 1: 1 by user input, the electronic device may process the image obtained through the camera so that the horizontal and vertical ratio of the image is 1:1, and display the processed image through a display.

### [Detailed Description of the Invention]

### [Technical Challenges]

An electronic device that includes a display with a fixed size (e.g., a display that does not provide an expanded or retracted screen), if the aspect ratio of the image is set to a full ratio by an input, may process the image obtained through the camera so that the horizontal and vertical ratio of the image are the same as the horizontal and vertical ratio of the display (e.g., the horizontal and vertical ratios of a fixed-size display), and may display the processed image through the display. For example, the electronic device including the display with the fixed size, if the aspect ratio of the image is set to the full ratio by the input, may obtain information about a predefined horizontal and vertical ratio of the display from memory. The electronic device, based on information about the horizontal and vertical ratio of the display, may obtain an image through an area of an image sensor (e.g., an image sensor included in a camera module), the area corresponding to the horizontal and vertical ratio of the display, (e.g., the area that is set by the same horizontal and vertical ratio as the horizontal and vertical ratio of the display in the total area of the image sensor) and display the obtained image through the display.

However, unlike the electronic device including the display with the fixed size, in an electronic device including a flexible display, it may be difficult to predefine information about the horizontal and vertical ratio of the display corresponding to expansion or contraction of the flexible display. Accordingly, in the electronic device including the flexible display, if the aspect ratio of the image is set to the full ratio by an input, it may be difficult to process an image obtained through a camera so that the horizontal and vertical ratio of the image are the same as the horizontal and vertical ratio of externally exposed display.

Various embodiments of the present disclosure, in the electronic device including the flexible display, if the aspect ratio of the image is set to the full ratio by an input, it relates to a method of providing an image with the same horizontal and vertical ratio as the externally exposed display and the electronic device supporting the same.

The technical problems to be achieved by this disclosure are not limited to the technical problems mentioned above, and other technical problems that are not mentioned will be clearly understood by those skilled in the art from the description below.

### [Technical Solution]

An electronic device according to various embodiments may include a flexible display, an area of the flexible display exposed to an outside of the electronic device being reduced as the flexible display is inserted into an inside of the electronic device, the area being expanded as the flexible display is drawn to the outside of the electronic device, a camera module including an image sensor, at least one sensor, and at least one processor electrically connected to the flexible display, the camera module, and the at least one sensor, wherein the at least one processor is configured to obtain, based on a user input, an image through an entire area of the image sensor, identify the area of the flexible display exposed to the outside through the at least one sensor, determine, within the image, a portion of the image corresponding to the area of the identified flexible display, and display, through the flexible display, the determined portion of the image.

A method of providing an image in an electronic device according to various embodiments of the present disclosure may comprise obtaining, based on a user input, an image through an entire area of an image sensor a camera module included in the electronic device, identifying, through the at least one sensor of the electronic device, an area of a flexible display of the electronic device exposed to an outside of the electronic device, determining, within the image, a portion of the image corresponding to the area of the identified flexible display, and displaying, through the flexible display, the determined portion of the image.

An electronic device according to various embodiments may include a flexible display, an area of the flexible display exposed to an outside of the electronic device being reduced as the flexible display is inserted into an inside of the electronic device, the area being expanded as the flexible display is drawn from the inside the electronic device, a camera module 520 including an image sensor, at least one sensor, and at least one processor electrically connected to the flexible display, the camera module, and the at least one sensor, wherein the at least one processor is configured to identify, based on a user input, the area of the flexible display exposed to the outside through the at least one sensor, determine an area corresponding to the identified area of the flexible display exposed to the outside in the image sensor, obtain an image through the determined area of the image sensor, and display, through the flexible display, the obtained image.

### [Effects of The Invention]

A method for providing an image and an electronic device supporting the same according to various embodiments of the present disclosure may provide, if the aspect ratio of the image is set to the full ratio by an input, an image with the same horizontal and vertical ratio as the externally exposed flexible display.

### [Brief Description of Drawings]

FIG. 1 is a block diagram of an electronic device in a network environment, according to various embodiments.
FIG. 2 is a block diagram illustrating a camera module, in accordance with various embodiments.
FIG. 3A and FIG. 3B are diagrams illustrating an electronic device including a slidable display according to various embodiments.
FIG. 4A and FIG. 4B are diagrams illustrating an electronic device including a rollable display according to various embodiments.
FIG. 5 is a block diagram of an electronic device, according to various embodiments.
FIG. 6 is a flowchart illustrating a method of providing an image, according to various embodiments.
FIG. 7 is an exemplary diagram for illustrating a method of identifying a region of a display exposed to the outside, according to various embodiments.
FIG. 8 is an exemplary diagram for illustrating a method of providing an image, according to various embodiments.
FIG. 9 is an exemplary diagram for illustrating a method of representing an aspect ratio of an image, according to various embodiments.
FIG. 10 is an exemplary diagram for illustrating a method of providing an image, according to various embodiments.
FIG. 11 is an exemplary diagram for illustrating a method of providing an image, according to various embodiments.
FIG. 12 is a flowchart illustrating a method of displaying an image aspect ratio, according to various embodiments.
FIG. 13 is an exemplary diagram for illustrating a method of displaying an image aspect ratio, according to various embodiments.
FIG. 14 is a flowchart illustrating a method of providing an image, according to various embodiments.
FIG. 15 is an exemplary diagram for illustrating a method of providing an image, according to various embodiments.
FIG. 16 is a flowchart illustrating a method of providing an image, according to various embodiments.

### [Mode for Carrying out the Invention]

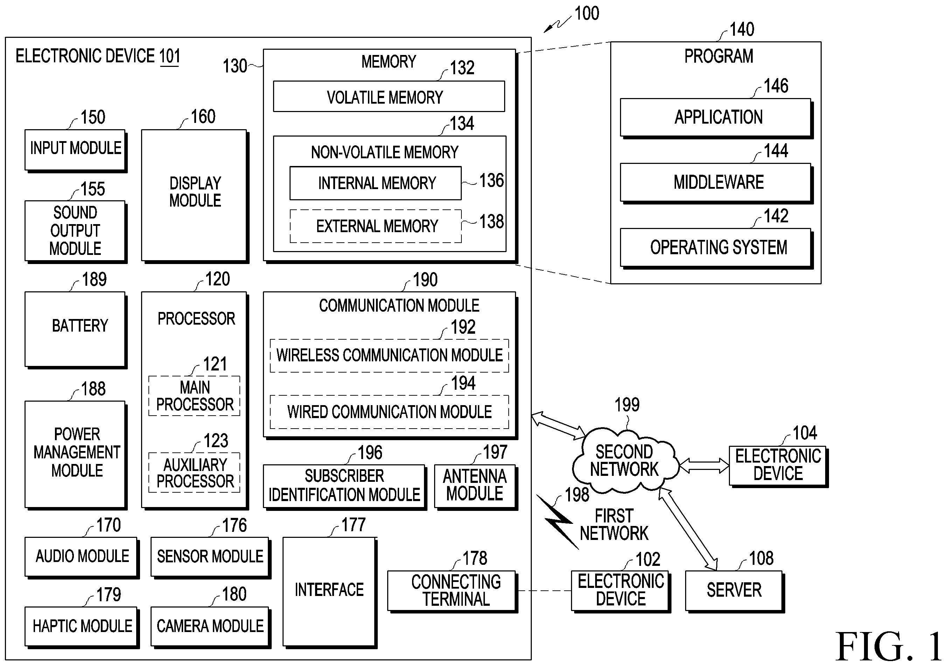

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

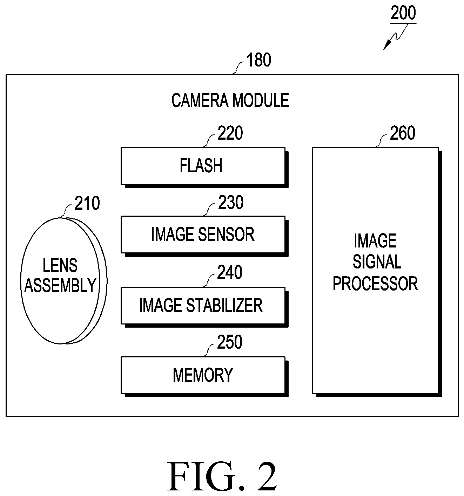

Fig. 2 is a block diagram 200 illustrating the camera module 180 according to various embodiments.

Referring to Fig. 2, the camera module 180 may include a lens assembly 210, a flash 220, an image sensor 230, an image stabilizer 240, memory 250 (e.g., buffer memory), or an image signal processor 260.

The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal.

According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer.

The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a input or system command of the user), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

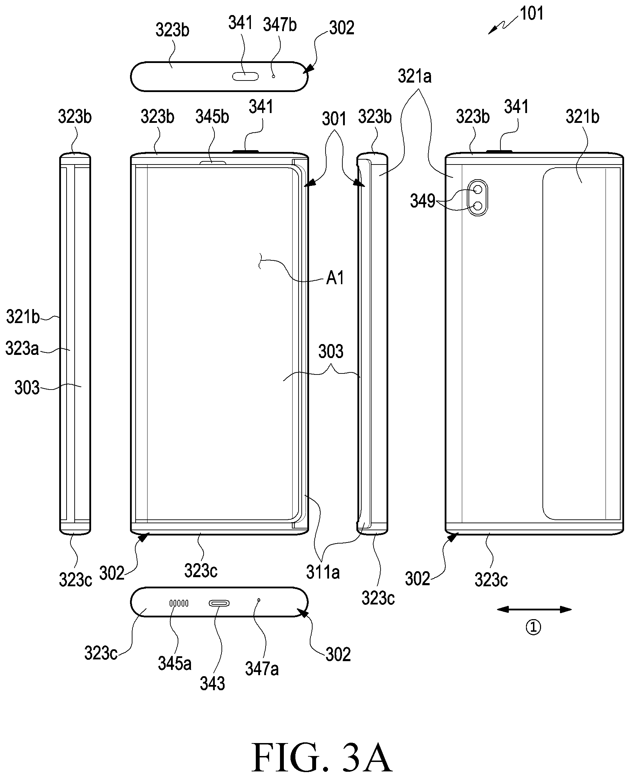

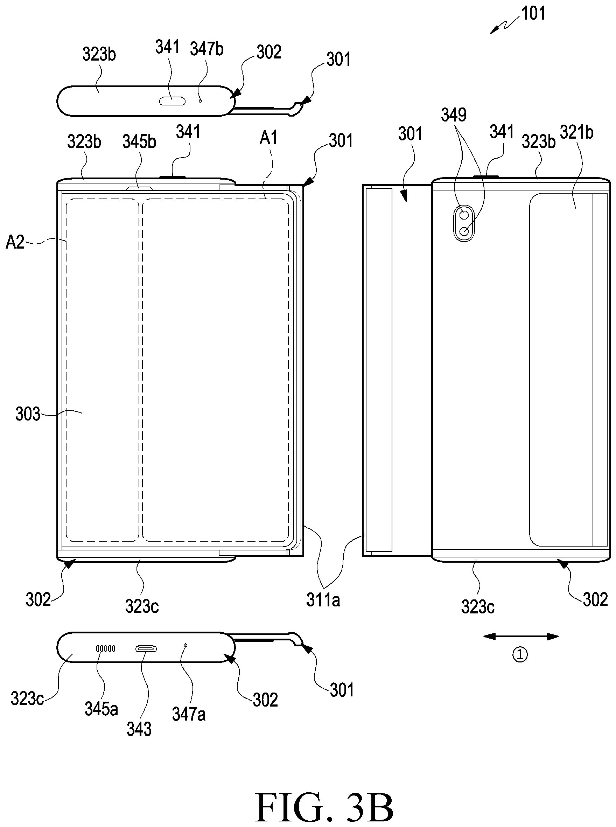

FIG. 3A and FIG. 3B are diagrams illustrating an electronic device 101 including a slidable display according to various embodiments.

In an embodiment, FIG. 3A may be a diagram representing a state in which a portion (e.g., a second area A2) of a slidable display (e.g., the display 303) is received inside a second structure. In an embodiment, FIG. 3B may be a diagram representing a state in which most of a slidable display (e.g., the display 303) is exposed to the outside of the second structure.

The state shown in FIG. 3A may be defined as the state in which the first structure 301 is closed with respect to the second structure 302, and the state shown in FIG. 2B may be defined as the state in which the first structure 301 is open with respect to the second structure 302. Depending on the embodiment, a "closed state" or an "open state" may be defined as the state in which the electronic device is closed or open.

Referring to FIGS. 3A and 3B, the electronic device 101 may include a first structure 301 and a second structure 302 disposed to be movable with respect to the first structure 301. In some embodiments, it may be interpreted as a structure in which the first structure 301 is disposed to be slidable on the second structure 302 in the electronic device 101. According to an embodiment, the first structure 301 may be disposed to enable reciprocating motion by a predetermined distance in the direction indicated by an arrow ① with respect to the second structure 302.

According to various embodiments, the first structure 301 may be referred, for example, as a first housing, a slide part, or a slide housing, and may be disposed on the second structure 302 so as to reciprocate. In an embodiment, the second structure 302 may be referred, for example, as a second housing, a main part, or a main housing, and may accommodate various electric components or electronic components, such as a main circuit board or a battery. A portion (e.g., a first area A1) of the display 303 may be disposed on the first structure 301. In some embodiments, the other portion (e.g., a second area A2) of the display 303 may be received inserted inside the second structure 302 (e.g., a slide-in operation), or may be exposed to the outside of the second structure 302 (e.g., a slide-out operation) as the first structure 301 moves relative to the second structure 302 (e.g., sliding movement).

According to various embodiments, the first structure 301 may include a first plate 3211a (e.g., a slide plate), and may include a first surface formed to include at least a portion of the first plate 311a and a second surface facing in the opposite direction of the first surface. According to an embodiment, the second structure 302 may include a second plate 321a (e.g., a rear case), a first side wall 323a extending from the second plate 321a, a second side wall 323b extending from the first side wall 323a and the second plate 321a, a third side wall 323c extending from the first side wall 323a and the second plate 321a so as to be parallel to the second side wall 323b, and/or a rear plate 321b (e.g., a rear window). In some embodiments, the second side wall 323b and the third side wall 323c may be formed to be perpendicular to the first side wall 323a. According to an embodiment, the second plate 321a, the first side wall 323a, the second side wall 323b, and the third side wall 323c may be formed to be open at one side (e.g., the front surface) so as to accommodate (or surround) at least a portion of the first structure 301. For example, the first structure 301 may be coupled to the second structure 302 such that at least a portion thereof is surrounded, and may slide in the direction, for example, in the direction of arrow (T), parallel to the first surface or the second surface while being guided by the second structure 302.

According to various embodiments, the second side wall 323b or the third side wall 323c may be omitted. According to an embodiment, the second plate 321a, the first side wall 323a, the second side wall 323b, and/or the third side wall 323c may be formed as separate structures, and may be coupled or assembled to each other. The rear plate 321b may be coupled to surround at least a portion of the second plate 321a. In some embodiments, the rear plate 321b may be formed to be substantially integral with the second plate 321a. According to an embodiment, the second plate 321a or the rear plate 321b may cover at least a portion of the display 303. For example, at least a portion of the display 303 may be inserted inside the second structure 302, and the second plate 321a or the rear plate 321b may cover the portion of the flexible display 303, which is inserted inside the second structure 302.

According to various embodiments, the first structure 301 may move in a first direction (e.g., the direction ①) parallel to the second plate 321a (e.g., the rear case) and the second side wall 323b so as to enter the open state and the closed state with respect to the second structure 302, and the first structure 301 may move to the position at a first distance from the first side wall 323a in the closed state and the position at a second distance, which is greater than the first distance, from the first side wall 323a in the open state. In some embodiments, the first structure 301 may be positioned to surround a portion of the first side wall 323a in the closed state.

According to various embodiments, the second structure 302 may include at least a portion of a non-conductive material (e.g., polymer material (e.g., plastic), glass, or ceramic). For example, the second structure 302 may be formed by combining a conductive housing and a plate made of a polymer material.

According to various embodiments, the electronic device 101 may include a display 303, a key input device 341, a connector hole 343, audio modules 345a, 345b, 347a, and 347b, or a camera module 349. Although not shown, the electronic device 101 may further include an indicator (e.g., an LED device) or various sensor modules.

According to various embodiments, the display 303 may include a first area A1 and a second area A2. In an embodiment, the first area A1 may be disposed in the first surface so as to extend across substantially at least a portion of the first surface. The second area A2 may extend from the first area A1, and may be inserted into or received inside the second structure 302 (e.g., the housing), or may be exposed to the outside of the second structure 302 according to the sliding movement of the first structure 301. As will be explained later, the second area A2 may substantially move while being guided by a roller (not shown) mounted to the second structure 302 so as to be inserted inside the second structure 302 or exposed to the outside thereof. For example, a portion of the second area A2 may be deformed into a curved shape at a position corresponding to the roller while the first structure 301 is sliding.

According to various embodiments, when viewed from the top of the first plate 311a (e.g., a slide plate), as the first structure 301 moves from the closed state to the open state, the second area A2 may be gradually exposed to the outside of the second structure 302, thereby forming a substantially flat plane together with the first area A1. The display 303 may be connected to a touch sensing circuit, a pressure sensor capable of measuring the intensity (pressure) of a touch, and/or a digitizer for detecting a magnetic-field type stylus, or may be disposed adjacent thereto. In an embodiment, at least a portion of the second area A2 may be inserted inside the second structure 302, and a portion of the second area A2 may be visually exposed to the outside even in the state shown in FIG. 2A (e.g., in the closed state). In some embodiments, irrespective of the closed state or the open state, a portion of the exposed second area A2 may be positioned on the roller, and a portion of the second area A2 may maintain the curved shape at a position corresponding to the roller.

The key input device 341 may be disposed on the second side wall 323b or the third side wall 323c of the second structure 302. The electronic device 101 may be designed to exclude the illustrated key input device 341 or include additional key input devices depending on the appearance and the usage state thereof. In some embodiments, the electronic device 101 may include a key input device (not shown), for example, a home key button or a touch pad disposed around the home key button. According to another embodiment, at least a portion of the key input device 341 may be positioned in an area of the first structure 301.

According to various embodiments, the connector hole 343 may be omitted according to embodiments, and may receive a connector (e.g., a USB connector) for transmitting and receiving power and/or data to and from an external electronic device. Although not shown, the electronic device 101 may include a plurality of connector holes 343, and some of the plurality of connector holes 343 may function as connector holes for transmitting and receiving audio signals to and from an external electronic device. Although the connector hole 343 is disposed on the third side wall 323c in the illustrated embodiment, the disclosure is not limited thereto, and the connector hole 343 or a connector hole (not shown) may be disposed on the first side wall 323a or the second side wall 323b.

According to various embodiments, the audio modules 345a, 345b, 347a, and 347b may include speaker holes 345a and 345b or microphone holes 347a and 347b. One of the speaker holes 345a and 345b may be provided as a receiver hole for voice calls, and the other may be provided as an external speaker hole. The microphone holes 347a and 347b may have a microphone provided therein in order to obtain external sound, and in some embodiments, a plurality of microphones may be disposed to detect the direction of sound. In some embodiments, the speaker holes 345a and 345b and the microphone holes 347a and 347b may be implemented as a single hole, or a speaker (e.g., a piezo speaker) may be included without the speaker holes 345a and 345b. According to an embodiment, the speaker hole indicated by reference number "345b" may be disposed in the first structure 301, and may be used as a receiver hole for voice calls, and the speaker hole (e.g., an external speaker hole) indicated by reference number "345a" or the microphone holes 347a and 347b may be disposed in the second structure 302 (e.g., on one of the side surfaces 323a, 323b, and 323c).

The camera module 349 may be provided to the second structure 302, and may photograph a subject in the direction opposite the first area A1 of the display 303. The electronic device 101 may include a plurality of camera modules 349. For example, the electronic device 101 may include a wide-angle camera, a telephoto camera, or a macro camera, and according to an embodiment, the electronic device 101 may include an infrared projector and/or an infrared receiver, thereby measuring a distance to the subject. The camera module 349 may include one or more lenses, an image sensor, and/or an image signal processor. Although not shown, the electronic device 101 may further include a camera module (e.g., a front camera) for photographing a subject in the first area A1 of the display 303. For example, the front camera may be disposed around the first area A1 or in the area overlapping the display 303, and the camera disposed in the area overlapping the display 303 may photograph a subject by passing through the display 303.

According to various embodiments, an indicator (not shown) of the electronic device 101 may be disposed in the first structure 301 or the second structure 302, and may include a light-emitting diode, thereby providing state information of the electronic device 101 in the form of a visual signal. A sensor module (not shown) of the electronic device 101 may produce an electrical signal or data value corresponding to an internal operating state of the electronic device 101 or an external environmental state. The sensor module may include, for example, a proximity sensor, a fingerprint sensor, or a biometric sensor (e.g., an iris/face recognition sensor or an HRM sensor). In another embodiment, at least one of sensor modules, such as a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor, may be further included.

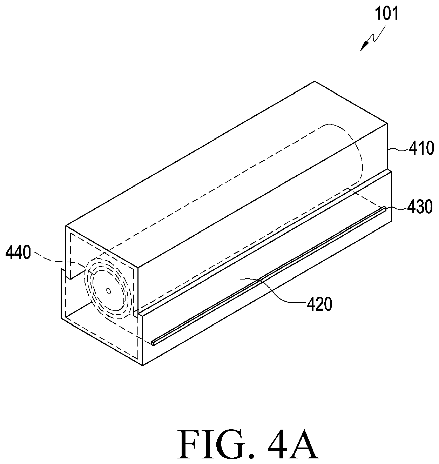

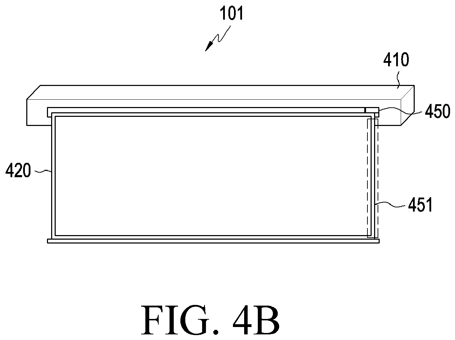

FIG. 4A and FIG. 4B are diagrams illustrating an electronic device 101 including a rollable display according to various embodiments.

Referring to FIGS. 4A and 4B, in an embodiment, the electronic device 101 may include a rollable display (e.g., a display 420) as a flexible display.

In an embodiment, the electronic device 101 includes a housing 410, a display 420, an opening 430 through which the display 420 can be pulled in/out (inserted/drawn), a roller 440 around which the display 420 can be wound, and a sensor 450.

In an embodiment, the display 420 may be pulled in/out through the opening 430 as the roller 440 rotates. If the display 420 is pulled (inserted) in through the opening 430, a display area of the display 420 may be reduced, and if the display 420 is pulled out through the opening 430, the display area of the display 420 may increase.

In an embodiment, the rotation of the roller 440 may be performed by user interaction in which the user pulls or pushes the display 420 (or a member (not shown) for pulling or pushing the display 420). However, the disclosure is not limited thereto, and the roller 440 may be rotated by a driving module that drives the roller 440 according to a control from the processor 120.

FIGS. 4A and 4B illustrate that the electronic device 101, the rollable display 420 of the electronic device being implemented in a form of being pulled out from the housing 410 in a first direction (and pulled in the housing 410 in a second direction opposite to the first direction) by one roller 440 included in the housing 410, but the disclosure is not limited thereto. For example, the electronic device 101 may be implemented in a form in which a rollable display is pulled out in different directions (e.g., in both directions) from a housing included in the electronic device by two or more rollers.

Although not shown in FIGS. 4A and 4B, in an embodiment, the electronic device 101 may include a component that can fix the rolled-up state of the display 420 and the unfolded state of the display 420.

In an embodiment, the sensor 450 may detect an area of the display 420 externally exposed if the display 420 is pulled out of the housing 410 or pulled in the housing 410 according to the rotation of the roller 440. For example, the sensor 450 may detect a pattern 131 printed on the display 420. The pattern 131 may be a QR code, a barcode, a black-and-white pattern, or a color pattern corresponding to a pixel line of the display 420. As the display 420 is pulled out, a value of the pattern 131 printed on the display 420 may change, and the processor 120 may detect the externally exposed area of the display 420 according to achanged value of the pattern 131. For another example, instead of the sensor 450 or in addition to the sensor 450, the electronic device may detect, through a motion sensor (e.g., an acceleration sensor and/or a gyro sensor) and/or a rotation detection sensor that detects the rotation of the roller 440, the externally exposed area of the display 420. However, a method for detecting the externally exposed area of the display 420 is not limited to the examples described above, and more various examples for detecting the exposed area of display 420 will be described later.

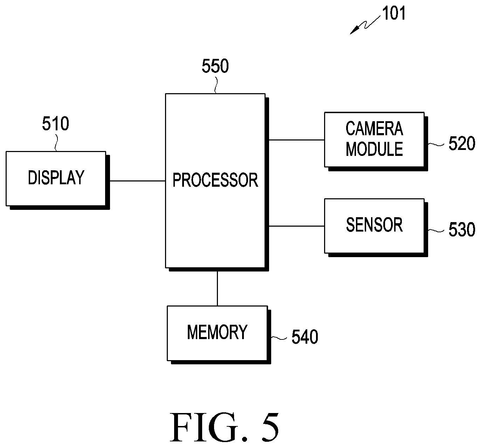

FIG. 5 is a block diagram of an electronic device 101, according to various embodiments.

Referring to FIG. 5, in an embodiment, the electronic device 101 may include a display 510, a camera module 520, a sensor 530, a memory 540, and/or a processor 550.

In an embodiment, although not shown in FIG. 5, the electronic device 101 may further include, if display 510 includes a slidable display 510 (e.g., the display 303), a first structure 301 and a second structure 302 for expanding or reducing the externally exposed area of the display. In an embodiment, the electronic device 101 may further include, if display 510 includes a rollable display (e.g., the display 420), the housing 410 for expanding or reducing the externally exposed area of the display.

In an embodiment, display 510 may be included in display module 160 of FIG. 1

In an embodiment, display 510 may be a flexible display. For example, the display 510 may be a slidable display, as shown in FIGS. 3A and 3B. For another example, the display 510 may be a rollable display, as shown in FIGS. 4A and 4B. However, the disclosure is not limited thereto, and the display 510 may include any displays in which the size of the area exposed to the outside of the electronic device 101 can be changed. Hereinafter, as the display 510 is pulled in the inside of the electronic device 101 or is pulled out into the outside of the electronic device 101, the area of the display 510 exposed to the outside of the electronic device 101 will be referred to as the "display area of the display".

In an embodiment, the display 510 may be pulled in the inside of the electronic device 101 or pulled out into the outside of the electronic device 101, manually or automatically. For example, display 510 may be pulled in the electronic device 101 (e.g., the second structure 302 or the housing 410) or pulled out from the electronic device 101, by a user input (e.g., a force of the user pulling or pushing the first structure 301 or the display 420) (e.g., manually). For another example, the display 510 may be pulled in the electronic device 101 (e.g., the second structure 302 or the housing 410) or pulled out from the electronic device 101, based on an input to the screen (e.g., an icon) displayed through the display 510 or a physical key input(e.g., automatically).

In an embodiment, the camera module 520 may be included in the camera module 180 of FIGS. 1 and 2.

In an embodiment, the camera module 520 may obtain an image while the display area of the display is expanded or reduced (or in a state in which at least a partial area of the display 510 is exposed to the outside). For example, the camera module 520 may obtain a plurality of images continuously (or in real time) while the display area of the display is expanded or contracted.

In an embodiment, the sensor 530 may be configured to identify (e.g., calculate) the display area of the display.

In an embodiment, the sensor 530 may include a hall sensor to identify the display area of the display. For example, if the display 510 is a slidable display as shown in FIGS. 3A and 3B, a plurality of hall sensors are disposed in the second structure 302, and a magnet may be disposed in the first structure 301. As the first structure 301 is slidably moved, a position of the magnet disposed in the first structure 301 may change. The plurality of hall sensors disposed in the second structure 302 may detect a magnetic field that is formed by the magnet and is changed depending on the position of the magnet. The display area of the display may be identified by the plurality of hall sensors disposed in the second structure 302 by detecting the magnetic field formed by the magnet.

In an embodiment, sensor 530 may include an optical sensor to identify the display area of the display. For example, if the display 510 is a slidable display as shown in FIGS. 3A and 3B, an optical pattern may be disposed on the second structure 302, and the optical sensor (e.g., a photo detector) may be disposed on the first structure 301. As the first structure 301 is slidably moved, the position of the optical sensor disposed on the first structure 301 may is moved. By detecting, by the photo detector, the optical pattern disposed on the second structure 302, the display area of the display may be identified.

In an embodiment, the sensor 530 may include an inertial sensor (also referred to as a "motion sensor") to identify the display area of the display. For example, if the display 510 is a slidable display as shown in FIGS. 3A and 3B, acceleration sensors (e.g., 6-axis acceleration sensors) may be disposed in each of the first structure 301 and the second structure 302. By obtaining, by the acceleration sensors, information about a relative position (or change in position) of the first structure 301 with respect to the second structure 302, the display area of the display may be identified.

In an embodiment, the sensor 530 may include a pressure sensor to identify the display area of the display. For example, when the display 510 is a slidable display as shown in FIGS. 3A and 3B, the pressure sensor may be included in the display 510. As the first structure 301 slides with respect to the second structure 302, a pressure sensed at a portion forming a curved surface within the display 510 and a pressure sensed at a flat portion within the display 510 may be different. Based on information about the pressure detected by the pressure sensor, the display area of the display may be identified.

In an embodiment, the sensor 530 may include an illumination sensor to identify the display area of the display. For example, if the display 510 is a slidable display as shown in FIGS. 3A and 3B, a respective plurality of portions of display 510 may penetrate different amounts of an external light (e.g., the respective plurality of portions of the display 510 may be implemented to have different blocking rates for the external light). By detecting, by the least one illuminance sensor disposed on the second structure 302, the amount of external light (or a change in the amount of the external light) as the first structure 301 is slidably moved, the display area of the display may be identified.

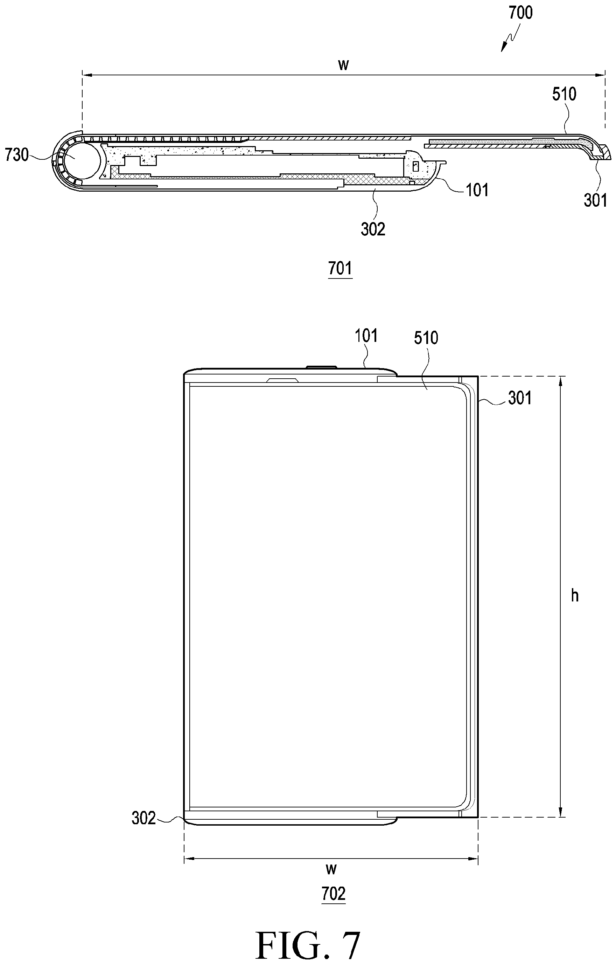

In an embodiment, the sensor 530 may include a rotation angle sensor to identify the display area of the display. For example, if the display 510 is a slidable display as shown in FIGS. 3A and 3B, by detecting, by at least one rotation angle sensor disposed on the roller (e.g., roller 730 in FIG. 7), an amount of an rotation angle (or a change in the rotation angle) at which the roller rotates as the first structure 301 is slidably moved, the display area of the display may be identified.

In an embodiment, although not shown in FIG. 5, the electronic device 101 may include devices for identifying the display area of the display in addition to the sensor 530. For example, if the display 510 is a slidable display as shown in FIGS. 3A and 3B, the first structure 301 may include a mechanical switch element, and the second structure 302 may include a recess or a protrusion that can engage or interfere with the mechanical switch element. While the first structure 301 is 301 is slidably moved with respect to the second structure 302, by identifying a position of the groove or the protrusion that engages or interferes with the mechanical switch element included in the first structure 301, the display area of the display may be identified.

In the above-described examples, if the display 510 is a slidable display as shown in FIGS. 3A and 3B, a method identifying the display area of the display by the sensor 530 is described, but the method is not limited thereto. Even when the display 510 is a rollable display as shown in FIGS. 4A and 4B, penetrate the sensor 530 can identify the display area of the display in the same or similar manner as the above-described examples.

In an embodiment, memory 540 may be included in memory 130 of FIG. 1.

In an embodiment, memory 540 may store information for performing at least part of the operation of providing an image. The information stored in the memory 540 will be described later.

In an embodiment, processor 550 may be included in the processor 120 of FIG. 1.

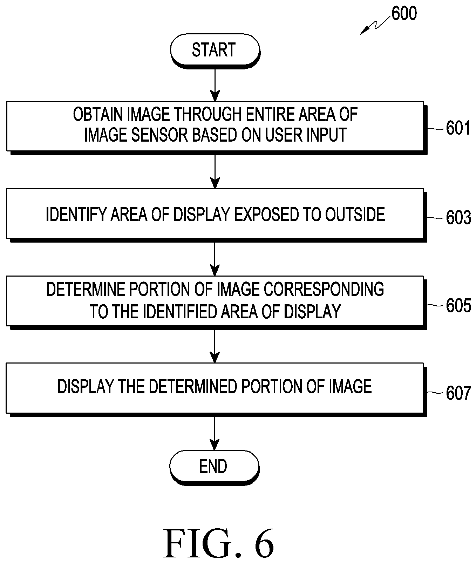

In an embodiment, the processor 550 may overall control the operation of providing the image. In an embodiment, the processor 550 may include one or more processors 550 to perform the operation of providing the image. The operation performed by the processor 550 to provide the image will be described with reference to FIG. 6 and below.

In an embodiment, FIG. 5 illustrates the electronic device 101 including a display 510, a camera module 520, a sensor 530, a memory 540, and/or a processor 550, but is not limited to thereto. For example, the electronic device 101 may further include at least one component (e.g., a communication module 190) among the components of the electronic device 101 shown in FIG. 1.

According to various embodiments, an electronic device 101 may include a flexible display (e.g., display 510), an area of the flexible display exposed to an outside of the electronic device 101 being reduced as the flexible display is inserted into an inside of the electronic device 101, the area being expanded as the flexible display is drawn to the outside of the electronic device 101, a camera module 520 including an image sensor, at least one sensor (e.g., sensor 530), and at least one processor (e.g., processor 550) electrically connected to the flexible display, the camera module, and the at least one sensor, wherein the at least one processor is configured to obtain, based on a user input, an image through an entire area of the image sensor, identify the area of the flexible display exposed to the outside through the at least one sensor, determine, within the image, a portion of the image corresponding to the area of the identified flexible display, and display, through the flexible display, the determined portion of the image.

In various embodiments, the user input may include a user input for setting an image aspect ratio to a full ratio.

In various embodiments, the at least one processor may be configured to identify a horizontal and vertical ratio of the area of the flexible display exposed to the outside.

In various embodiments, the at least one processor may be configured to determine, as the portion of the image, an area in the image, the area in the image having a same horizontal and vertical ratio as a horizontal and vertical ratio of the area of the flexible display based on a center of the image.

In various embodiments, the at least one processor may be configured to determine, as the portion of the image, an area in the image, the area in the image including a boundary line in a direction in which the flexible display is expanded or reduced based on the center of the image or in a direction opposite to the direction among boundary lines of the image, the area in the image having a same horizontal and vertical ratio as the horizontal and vertical ratio of the area of the flexible display.

In various embodiments, the at least one processor may be configured to display, through the flexible display, an image aspect ratio corresponding to the horizontal and vertical ratio of the area of the flexible display exposed to the outside.

In various embodiments, the at least one processor may be configured to identify whether the horizontal and vertical ratio of the area of the flexible display exposed to the outside is a same as an aspect ratio of one of a designated plurality of image aspect ratios, and display, through the flexible display, information indicating the designated plurality of image aspect ratios without displaying information indicating a full ratio if the horizontal and vertical ratio of the area of the flexible display exposed to the outside is the same as the aspect ratio of the one of the designated plurality of image aspect ratios, and wherein the one image aspect ratio is display to be distinguished from remaining image aspect ratios among the designated plurality of image aspect ratios.

In various embodiments, the at least one processor may be configured to crop the determined portion of the image from the image, and display the cropped portion of the image through the flexible display.

In various embodiments, the at least one processor may be configured to receive a user input for selecting one image aspect ratio from among a designated plurality of image aspect ratios, and control such that the area of the flexible display corresponding to the selected one image aspect ratio is exposed to the outside.

FIG. 6 is a flowchart 600 illustrating a method of providing an image, according to various embodiments.

Referring to FIG. 6, in operation 601, in an embodiment, the processor 550 may obtain an image through an entire area of the image sensor of the camera module 520, based on a user input.

In an embodiment, the user input may be a user input for setting an image aspect ratio (e.g., the horizontal and vertical ratio of the image to be displayed through the display 510) to a full ratio. For example, the user input setting the image aspect ratio to the full ratio may be an input for displaying an image obtained through the camera module 520 by the same horizontal and vertical ratio as the horizontal and vertical ratio of the display area (e.g., the area currently exposed to the outside within the display 510) of the display. As another example, the user input setting the image aspect ratio to full ratio may be an user input for displaying, throughout an entire display area of the display, the image obtained through the camera module 520 at a horizontal and vertical ratio (e.g., at a size substantially the same as a size of the display area of the display) that is the same as the horizontal and vertical ratio of the display area of the display.

In an embodiment, if a camera application is executed, the processor 550 may display, through the display 510, the image obtained through the camera module 520, based on the most recently set image aspect ratio. For example, if the camera application is executed, the processor 550 may display, through the display 510, the image obtained through the camera module 520, based on the image aspect ratio the most recently set among image aspect ratios that can be set in the electronic device 101.

In an embodiment, the image aspect ratios that can be set for the electronic device 101 may include a designated plurality of image aspect ratios (e.g., image aspect ratios set to display the image at a fixed ratio, regardless of a change of the display area of the display) (e.g., image aspect ratios of 3:4, 16:9, and 1:1) and the full ratio.

In an embodiment, if the image aspect ratio is set to a first image aspect ratio among the designated plurality of image aspect ratios (e.g., one image aspect ratio among 3:4, 16:9, and 1:1), the processor 550 may obtain an image based on the set first image aspect ratio. For example, the processor 550 may obtain the image through an area of the image sensor of the camera module 520 corresponding to the first image aspect ratio (e.g., , if the first image aspect ratio is set to 1:1 at a 12M image sensor (an image sensor with 4000 horizontal pixels and 3000 vertical pixels), the area corresponding to the first image aspect ratio is an area corresponding to 3000 horizontal pixels and 3000 vertical pixels within the image sensor). For another example, the processor 550 (e.g., an application processor (e.g., the main processor 121 of FIG. 1) or the image signal processor 260) may obtain an image through the entire area of the image sensor of the camera module 520, and by cropping a portion (a portion to be cropped by the same horizontal and vertical ratio as the first image aspect ratio within the image obtained through the entire area of the image sensor of the camera module 520) corresponding to the aspect ratio of the first image within the obtained image, obtain an image (e.g., the cropped portion within the obtained image). In an embodiment, the processor 550 may display the obtained image through the display 510.

In an embodiment, the processor 550, if the image aspect ratio is set to the full ratio (e.g., if the image aspect ratio is set to the full ratio by the user input or if the most recently set image aspect ratio is the full ratio), may obtain the image through the entire area of the image sensor.

In operation 603, in an embodiment, the processor 550 may identify the area of the display 510 (the display area of the display) exposed to the outside of the electronic device 101 through the sensor 530. A method for identifying, by the processor 550, the display area of the display through the sensor 530 will be described with reference to FIG. 7 below.

FIG. 7 is an exemplary diagram 700 for illustrating a method of identifying an area of a display exposed to the outside, according to various embodiments.

Referring to FIG. 7, in an embodiment, reference numeral 701 may represent the electronic device 101 including a slidable display in a state (open state) in which at least a portion of the display 510 is exposed to the outside. In an embodiment, the processor 550 may identify a horizontal length (w) of the display area of the display 510, the horizontal length (w) being changed as the first structure 301 is slide-moved on the second structure 302.

In an embodiment, the processor 550 may identify the horizontal length (w) of the display area of the display, the horizontal length (w) being changed as the first structure 301 is slide-moved on the second structure 302 through a hall sensor. For example, a plurality of hall sensors may be disposed in the second structure 302 and a magnet may be disposed in the first structure 301. As the first structure 301 is slide-moved, a position of the magnet disposed in the first structure 301 may be changed. The plurality of Hall sensors disposed in the second structure 302 may detect a magnetic field that is formed by the magnet and is changed depending on the position of the magnet. By detecting, by the plurality of hall sensors disposed on the second structure 302, the magnetic field formed by the magnet, the processor 550 can identify the horizontal length (w) of the display area of the display 510.

In an embodiment, the processor 550 may identify, through an optical sensor, the horizontal length (w) of the display area of the display 510, the horizontal length (w) being changed as the first structure 301 is slide-moved on the second structure 302,. For example, an optical pattern may be disposed on the second structure 302, and an optical sensor (e.g., a photo detector) may be disposed on the first structure 301. As the first structure 301 is slide-moved, a position of the optical sensor disposed on the first structure 301 may be moved. By detecting, by the photo detector, the optical pattern disposed on the second structure 302, the processor 550 may identify the horizontal length (w) of the display area of the display 510.

In an embodiment, the processor 550 may identify, through an inertial sensor, the horizontal length (w) of the display area of the display 510, the horizontal length (w) being changed as the first structure 301 slide-moved on the second structure 302. For example, acceleration sensors (e.g., 6-axis acceleration sensors) may be disposed in the respective first structure 301 and second structure 302. As the acceleration sensors obtain information about a relative position (or change in the position) of the first structure 301 with respect to the second structure 302, the processor 550 may identify the horizontal length (w) of the display area of the display 510.

In an embodiment, the processor 550 may identify, through a pressure sensor, the horizontal length (w) of the display area of the display 510, the horizontal length (w) being changed as the first structure 301 is slide-moved on the second structure 302. For example, the pressure sensor may be included in display 510. As the first structure 301 is slide-moved with respect to the second structure 302, a pressure sensed at a portion forming the curved surface within the display 510 and a pressure sensed at a flat portion within the display 510 are different. Based on information about the pressure sensed by the pressure sensor, the processor 550 may identify the horizontal length (w) of the display area of the display 510.

In an embodiment, the processor 550 may identify, through an illuminance sensor, the horizontal length (w) of the display area of the display 510, the horizontal length (w) being changed as the first structure 301 is slide-moved on the second structure 302. For example, each of a plurality of portions of the display 510 may penetrate different amounts of an external light (e.g., the respective plurality of portions of the display 510 may be implemented to have different blocking rates for the external light). By detecting, by at least one illuminance sensor disposed on the second structure 302, the amount of the external light (or change in the amount of the external light) as the first structure 301 is slide-moved, the processor 550 may identify the horizontal length (w) of the display area of the display 510.

In an embodiment, the processor 550 may identify, through a rotation angle sensor, the horizontal length (w) of the display area of the display 510, the horizontal length (w) being changed as the first structure 301 is slide-moved on the second structure 302. For example, at least one rotation angle sensor disposed on the roller 730 may detect an amount of a rotation angle (or change in rotation angle) by which the roller 730 rotates as the first structure 301 is slide-moved. Based on the information about the amount of the rotation angle, the processor 550 can identify the horizontal length (w) of the display area of the display 510.

In an embodiment, although not shown in FIG. 7, the electronic device 101 may include devices for identifying the display area of the display in addition to the sensor 530. For example, the first structure 301 may include a mechanical switch element, and the second structure 302 may include a recess or a protrusion that may engage or interfere with the mechanical switch element. While the first structure 301 is slide-moved with respect to the second structure 302, by identifying a position of the groove or the protrusion that engages or interferes with the mechanical switch element included in the first structure 301, the processor 550 may identify the horizontal length (w) of the display area of the display 510.

In an embodiment, the processor 550 may identify the display area of the display 510, based on the horizontal length (w) of the display area of the display 510 and the vertical length (h) of the display area of the display. For example, at reference number 702, the processor 550 may determine (e.g., calculate), by identifying the horizontal length (w) of the display area of the display 510 and the vertical length (h) of the display area of the display, the display area of the display 510 (e.g., the horizontal and vertical ratio of the display area of the display and/or the size of the display area of the display).

In FIG. 7, a method of identifying the display area of the display is illustrated in a case that the display 510 is a slidable display. However, even in a case that the display 510 is a rollable display, by using the same or similar method as the examples described with reference to FIG. 7, the processor 550 can identify the display area of the display 510.

At operation 605, in an embodiment, the processor 550 may determine a portion of the image within the image, the portion corresponding to the identified area of the display 510 (the display area of the display).

In an embodiment, the processor 550 may determine an image portion corresponding to the display area of the display within an image (hereinafter referred to interchangeably as "entire image area") obtained through the entire area of the image sensor. For example, the processor 550 (e.g., the application processor or the image signal processor 260) may determine the area, in the entire image area, having a horizontal and vertical ratio equal to the horizontal and vertical ratio of the display area of the display based on a center of the entire image area, as the image portion corresponding to the display area of the display (hereinafter, the method of determining, as the image portion corresponding to the display area of the display, the area, in the entire image area, having the horizontal and vertical ratio equal to the horizontal and vertical ratio of the display area of the display based on the center of the entire image area, is referred to as "first method"). For another example, the processor 550 may determine, as the image portion corresponding to the display area of the display, an area, in the entire image area, including a boundary line, among the boundary lines of the entire image area, in a direction opposite to a direction in which the display area of the display is expanded based on the center of the entire image area, the area having the same horizontal and vertical ratio as the horizontal and vertical ratio of the display area of the display (hereinafter, the method of determining, as the image portion corresponding to the display area of the display, the area, in the entire image area, including a boundary line, among the boundary lines of the entire image area, in a direction opposite to a direction in which the display area of the display is expanded based on the center of the entire image area, the area having the same horizontal and vertical ratio as the horizontal and vertical ratio of the display area of the display is referred to as the "second method"). For another example, the processor 550 may determine, as the image portion corresponding to the display area of the display, an area, in the entire image area, including a boundary line, among the boundary lines of the entire image area, in the same direction as a direction in which the display area of the display is expanded based on the center of the entire image area, the area having the same horizontal and vertical ratio as the horizontal and vertical ratio of the display area of the display (hereinafter, the method of determining, as the image portion corresponding to the display area of the display, the area, in the entire image area, including a boundary line, among the boundary lines of the entire image area, in the same direction as a direction in which the display area of the display is expanded based on the center of the entire image area, the area having the same horizontal and vertical ratio as the horizontal and vertical ratio of the display area of the display, is referred to as the "third method"). However, the methods of determining the image portion corresponding to the display area of the display are not limited to the first to third methods described above. In an embodiment, the processor 550 may determine the image portion corresponding to the display area of the display using one of the first to third methods based on an user input.

In an embodiment, the processor 550 may determine the image portion corresponding to the identified area of the display 510 (the display area of the display) in the image, based on a zoom ratio associated with the camera. For example, the processor 550 may determine, based on the horizontal and vertical ratio of the display area of the display and a currently set zoom ratio of the camera, the image portion (e.g., a cropped area within the image, which will be described later) in the entire image area.

At operation 607, in an embodiment, processor 550 may display the determined image portion through display 510.

In an embodiment, the processor 550 may crop the image portion (hereinafter referred to as a "first image portion") corresponding to the display area of the display within the entire image area.

In an embodiment, the application processor may crop the first image portion within the entire image area. The application processor may display the cropped first image portion through the display 510. In an embodiment, the application processor may encode the entire image area using the joint photographic experts group (JPEG) method. However, the method by which the application processor encodes the entire image area is not limited to the JPEG.

In an embodiment, the image signal processor 260, instead of the application processor, may crop the first image portion within the entire image area. For example, the image signal processor 260 may encode the cropped first image portion and store the encoded first image portion in the memory 540. The application processor may decode the encoded first image portion stored in the memory 540 and display the decoded first image portion through the display 510.

In an embodiment, the encoding operation performed by the application processor or image signal processor 260 may be performed in a case that the camera is set to obtain a capture image (e.g., in a case that a user input to capture an image is received while displaying a preview image), and may not be performed while a preview image is displayed through the display 510.

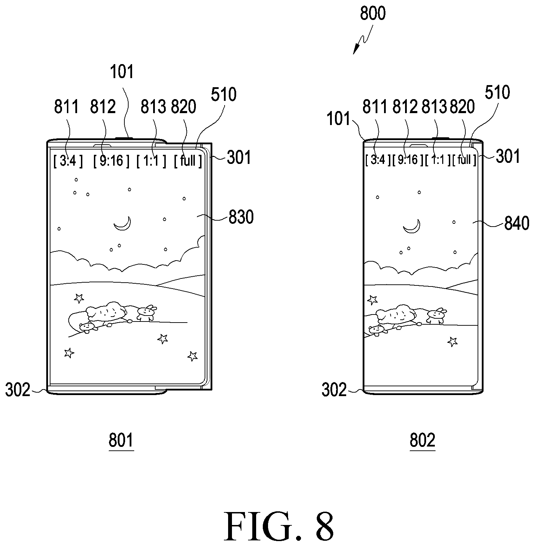

In an embodiment, the processor 550 may control the display 510 so that the cropped first image portion is displayed on the entire display area of the display (e.g., the entire area of the display 510 exposed to the outside of the electronic device 101). Hereinafter, with reference to FIG. 8, a method of displaying, by the processor 550, the cropped first image portion will be described.

FIG. 8 is an exemplary diagram 800 for illustrating a method of providing an image, according to various embodiments.

FIG. 8, in an embodiment, at reference numeral 801, if the image aspect ratio is set to the full ratio and the display 510 is maximally expanded, the processor 550 may display the first image portion 830 corresponding to the display area of the display through the entire display area of the display that is maximally expanded. In an embodiment, as shown at reference numeral 801, the processor 550 may display, along with the first image portion 830, information 811, 812, and 813 indicating a designated plurality of image aspect ratios and information 820 indicating the full ratio.

In an embodiment, at reference numeral 802, if the image aspect ratio is set to full ratio and the display 510 is maximally reduced (i.e., the display 510 is not expanded), the processor 550 may display the first image portion 840 corresponding to the display area of the display through the entire display area of the display that is maximally reduced. In an embodiment, as shown at reference numeral 802, the processor 550 may display, along with the first image portion 840, information 811, 812, and 813 indicating a designated plurality of designated image aspect ratios and information 820 indicating the full ratio.

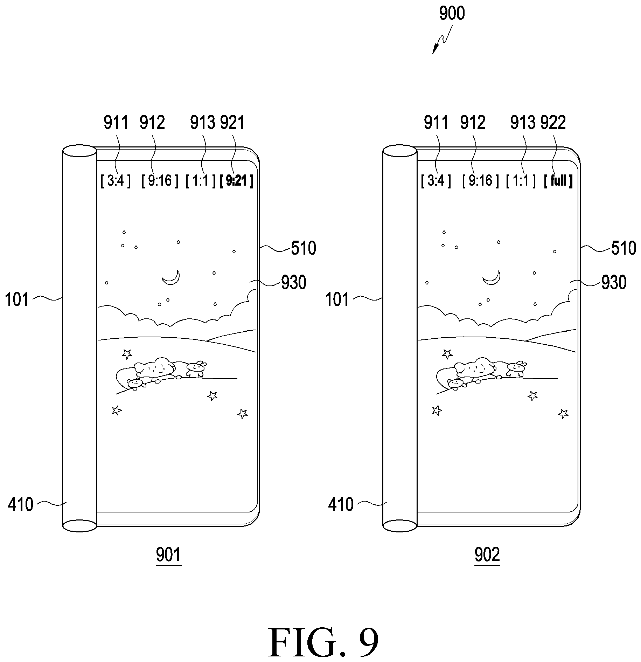

FIG.9 is an exemplary diagram 900 for illustrating a method of representing an aspect ratio of an image, according to various embodiments.

FIG. 9, in an embodiment, processor 550 may display information about an aspect ratio of a currently displayed image (e.g., the first image portion) (or the horizontal and vertical ratio of the display area of the display) or information about a currently set image aspect ratio through the display 510.

In an embodiment, if the image aspect ratio is set to full ratio, the processor 550 may display information representing the aspect ratio of the first image portion so that the information representing the aspect ratio of the first image portion is distinguished from information about other image aspect ratios. For example, as shown at reference numeral 901, if the image aspect ratio is set to the full ratio and the aspect ratio of the first image portion 930 is 9:21, the processor 550 may display the information 921, such that a shape of the information 921 and/or shading of an area where the information 921 (e.g., "9:21" as a text indicating the aspect ratio of the first image portion 930) is displayed is different from a shape of information about other image aspect ratios (e.g., information 911, 912, 913 representing the designated plurality of image aspect ratios) and/or shading of an area where the information about other image aspect ratios is displayed. However, the method of displaying the information representing the aspect ratio of the first image part 930 so that the information indicating the aspect ratio of the first image part 930 is distinguished from the information about the aspect ratios of other images is not limited to the above-described examples.

In an embodiment, as shown at 902, if the image aspect ratio is set to full ratio, the processor 550 may display information 922 indicating the full ratio through the display 510 such that the information 922 (e.g., "full" as a text indicating the full ratio) is distinguished from information about another image aspect ratio (e.g., information (911, 912, 913) representing the designated plurality of image aspect ratios) in order to indicate that the current image aspect ratio is set to the full ratio.

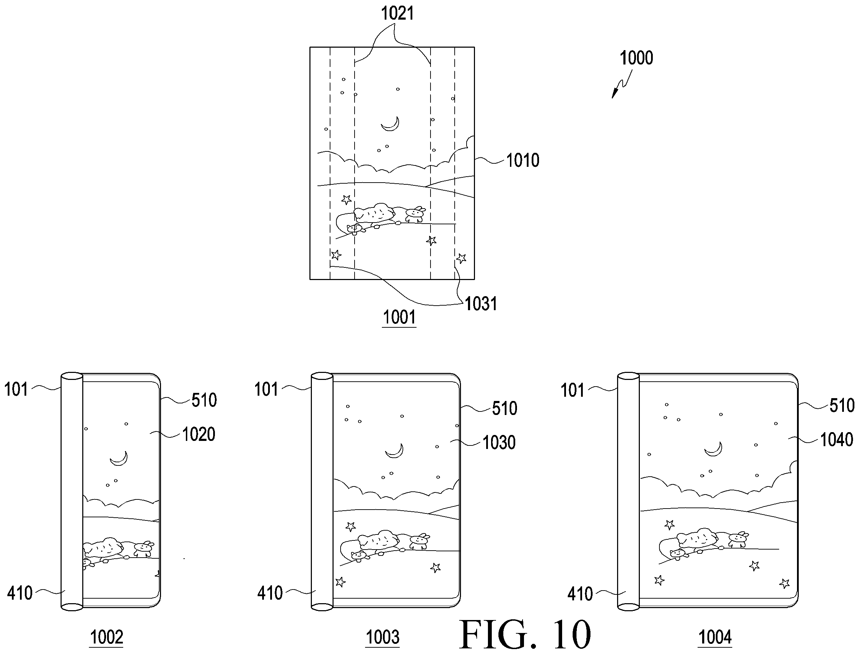

FIG. 10 is an exemplary diagram 1000 for illustrating a method of providing an image, according to various embodiments.

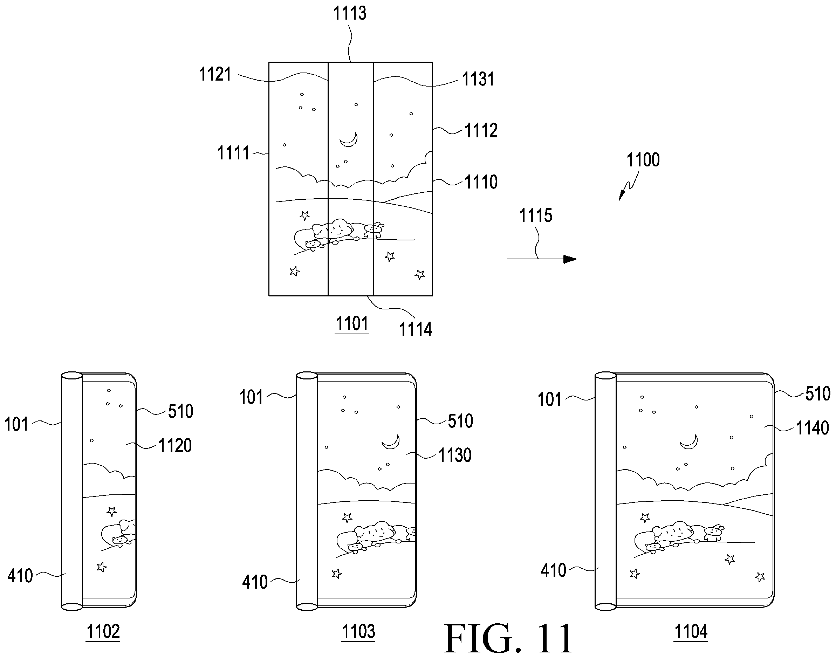

FIG. 11 is an exemplary diagram 1100 for illustrating a method of providing an image, according to various embodiments.

Referring to FIGS. 10 and 11, in an embodiment, FIG. 10 may be a diagram for illustrating a method of providing an image, based on the first method (e.g., the method of determining, as the image portion corresponding to the display area of the display, the area, in the entire image area, having the horizontal and vertical ratio equal to the horizontal and vertical ratio of the display area of the display based on the center of the entire image area), in a case that the image aspect ratio is set to the full ratio.

In an embodiment, in FIG. 10, for convenience of explanation, it is assumed that the horizontal and vertical ratio of the entire area of the image sensor is the same as the horizontal and vertical ratio of the display area of the display exposed to the outside in a case that the display 510 is fully expanded, and that the image aspect ratio is set to the full ratio.

In an embodiment, at reference numeral 1001, image 1010 may be an image obtained from the entire area of the image sensor. At reference numeral 1001, the area determined by the first lines 1021 within the image 1010 may be the first image portion cropped based on a center of the image 1010 in a case that the horizontal and vertical ratio of the display area of the display is a first ratio. At reference numeral 1001, the area determined by the second lines 1031 within the image 1010 may be the first image portion cropped based on the center of the image 1010 in a case that the horizontal and vertical ratio of the display area of the display is a second ratio.

In an embodiment, the processor 550, as shown by reference numerals 1002 to 1004, while the display area of the display 510 is expanded, the processor 550 may crop, based on the center of the entire image area, an area having the same horizontal and vertical ratio as the horizontal and vertical ratio of the display area of the display 510 within the image obtained from the entire area of the image sensor, and may display the cropped area through the display 510. For example, the processor 550, as shown by reference numeral 1002, in a state in which the horizontal and vertical ratio of the display area of the display 510 is the first ratio, may display the first image portion 1020 (e.g., corresponding to the area determined by the first lines 1021) cropped based on the center of the image 1010 within the image 1010, through the display 510. For another example, the processor 550, as shown by reference numeral 1003, in a state in which the horizontal and vertical ratio of the display area of the display 510 is the second ratio, may display the first image portion 1030 (e.g., corresponding to the area determined by the second lines 1031) cropped based on the center of the image 1010 within the image 1010 through the display (510). For another example, as shown by reference numeral 1004, the processor 550 may display the image 1040 corresponding to the image 1010 in a state in which the display area of the display 510 is maximally expanded.

In an embodiment, FIG. 11 may be a diagram for illustrating a method of providing an image based on the second method (e.g., the method of determining, as the image portion corresponding to the display area of the display, the area, in the entire image area, including a boundary line, among the boundary lines of the entire image area, in a direction opposite to a direction in which the display area of the display is expanded based on the center of the entire image area, the area having the same horizontal and vertical ratio as the horizontal and vertical ratio of the display area of the display), in a case that the image aspect ratio is set to the full ratio.

In an embodiment, in FIG. 11, for convenience of explanation, it is assumed that the horizontal and vertical ratio of the entire area of the image sensor is the same as the horizontal and vertical ratio of the display area of the display exposed to the outside in a case that the display 510 is fully expanded, and that the image aspect ratio is set to the full ratio.

In an embodiment, at reference numeral 1101, image 1110 may be an image obtained from the entire area of the image sensor. At reference numeral 1101, the area determined by the third line 1121 within the image 1100, in a case that the horizontal and vertical ratio of the display area of the display 510 is the first ratio, may be the first image portion including the boundary line 1111, among the boundary lines 1111, 1112, 1113, and 1114 of the entire image area, in the opposite direction to the direction 1115 in which the display area of the display is expanded based on the center of the image 1110. At reference numeral 1101, the area determined by the fourth line 1131 within the image 1100, in a case that the horizontal and vertical ratio of the display area of the display 510 is the second ratio, may be the first image portion including the boundary line 1111, among the boundary lines 1111, 1112, 1113, and 1114 of the entire image area, in the opposite direction to the direction 1115 in which the display area of the display is expanded based on the center of the image 1110.

In an embodiment, as shown by reference numerals 1102 to 1104, while the display area of the display 510 is expanded, the processor 550 may display the first image portion, through the display 510, including the boundary line, among the boundary lines of the entire image area, in the opposite direction to the direction in which the display area of the display 510 is expanded based on the center of the entire image area, the first image portion corresponding to the horizontal and vertical ratio of the display area of the display 510. For example, as shown at reference numeral 1102, in a state in which the horizontal and vertical ratio of the display area of the display 510 is the first ratio, the processor 550 may display the first image portion 1120 corresponding to the area determined by the third line 1121 within the image 1100 through the display 510. For another example, as shown at reference numeral 1103, in a state in which the horizontal and vertical ratio of the display area of the display 510 is the second ratio, the processor 550 may display the first image portion 1130 corresponding to the area determined by the fourth line 1131 within the image 1100 through the display 510. For another example, as shown by reference numeral 1104, the processor 550 may display, through the display 510, the image 1140 corresponding to the image 1110 in a state in which the display area of the display 510 is maximally expanded.

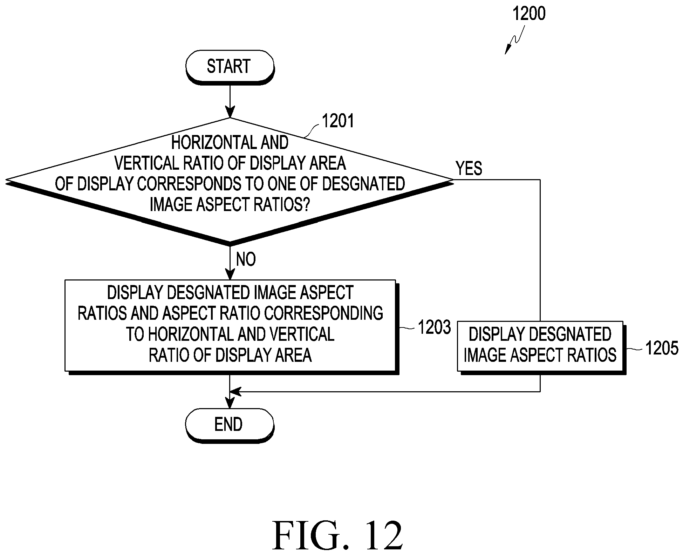

FIG. 12 is a flowchart 1200 illustrating a method of displaying an image aspect ratio, according to various embodiments.

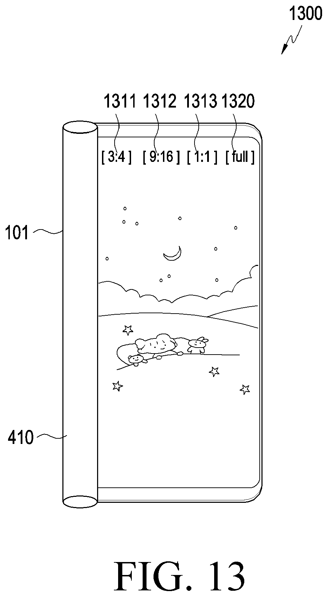

FIG. 13 is an exemplary diagram 1300 for illustrating a method of displaying an image aspect ratio, according to various embodiments.

FIG. 12 and FIG. 13, in operation 1201, in an embodiment, the processor 550 may determine whether the horizontal and vertical ratio of the display area of the display correspond to one of the designated image aspect ratios.

In an embodiment, if the image aspect ratio is set to the full ratio, the processor 550 may display the first image portion corresponding to the display area of the display through the display 510 as the display area of the display is changed. While displaying the first image portion, the processor 550 may identify whether the horizontal and vertical ratio of the display area of the display is the same as one of the designated image aspect ratios (e.g., image aspect ratios set to display the image at a fixed ratio regardless of the change in the display area of the display) (e.g., image aspect ratios of 3:4, 16:9, and 1:1).

If the horizontal and vertical ratio of the display area of the display does not correspond to one of the designated image aspect ratios in operation 1201, in operation 1203, in an embodiment, the processor 550 may display, through the display 510, the designated image aspect ratios and an image aspect ratio corresponding to the horizontal and vertical ratio of the display area of the display (or the full ratio set as the current image aspect ratio). For example, as shown in FIG. 13, if the horizontal and vertical ratio of the display area of the display does not correspond to one of the designated image aspect ratios (3:4, 16:9, and 1:1), the processor 550 may display information 1311, 1312, and 1313 indicating designated image aspect ratios and information 1320 indicating the full ratio set as the current image aspect ratio through the display 510. Although not shown in FIG. 13, in an embodiment, the processor 550 may display information indicating the full ratio, if the image aspect ratio is set to the full ratio, so that the information indicating the full ratio is differentiated from information indicating designated image aspect ratios.

If the horizontal and vertical ratio of the display area of the display corresponds to one of the designated image aspect ratios in operation 1201, in operation 1205, in an embodiment, the processor 550 may display, through the display 510, the designated image aspect ratios, without displaying the image aspect ratio corresponding to the horizontal and vertical ratio of the display area of the display (or the full ratio set as the current image aspect ratio).

In an embodiment, if the horizontal and vertical ratio of the display area of the display corresponds to one of the designated image aspect ratios, the processor 550 may display, through the display 510 , information indicating a designated image aspect ratio (e.g., 3:4) corresponding to the horizontal and vertical ratio of the display area of the display so that information indicating the designated image aspect ratio (e.g., 3:4) corresponding to the horizontal and vertical ratio of the display area of the display is distinguished from information indicating other designated image aspect ratios (e.g., 16:9 and 1:1).

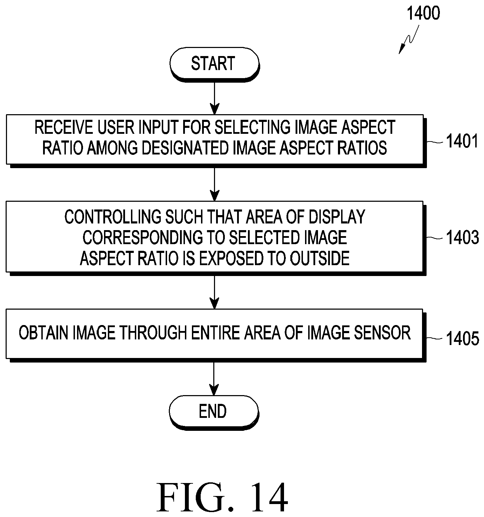

FIG. 14 is a flowchart 1400 illustrating a method of providing an image, according to various embodiments.

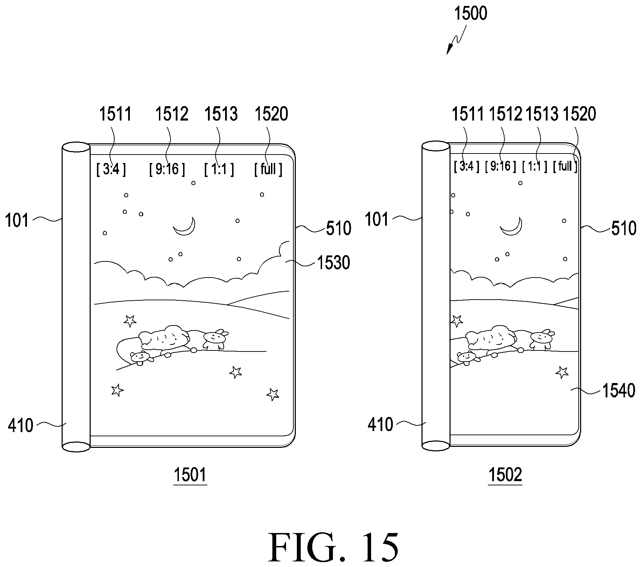

FIG. 15 is an exemplary diagram 1500 for illustrating a method of providing an image, according to various embodiments.

Referring to FIGS. 14 and 15, in operation 1401, in an embodiment, the processor 550 may receive a user input for selecting an image aspect ratio from among designated image aspect ratios.

In an embodiment, the designated image aspect ratios may be image aspect ratios set to display the image at a fixed ratio. For example, the designated image aspect ratios may include image aspect ratios of 3:4, 16:9, and 1:1. However, the designated image aspect ratios are not limited to the above-described image aspect ratios.

In operation 1403, in an embodiment, the processor 550 may control such that the area of the display 510 corresponding to the selected image aspect ratio is exposed to the outside.

In an embodiment, the processor 550 may expand or reduce (or contract) the display 510 so that the horizontal and vertical ratios of the display area is the same as an aspect ratio of the selected image. For example, the processor 550 may control a driving module to rotate a roller (e.g., roller 440) so that the horizontal and vertical ratio of the display area of the display is the same as the aspect ratio of the selected image.

In an embodiment, as shown at 1501, based on user input for selecting a designated image aspect ratio of 1:1, the processor 550 may change the area of the display 510 that is exposed to the outside so that the horizontal and vertical ratio of the display area is the same as the image aspect ratio of 1:1.

In an embodiment, in a state in which the area of the display 510 is exposed to the outside by the same horizontal and vertical ratio as the designated first image aspect ratio as the designated first image aspect ratio is selected, if a user input selecting a designated second image aspect ratio that is different from the designated first image aspect ratio is received, the processor 550 may expand or contract the display 510 so that the horizontal and vertical ratio of the display area is the same as the designated second image aspect ratio. For example, at reference numeral 1501, the processor 550 may receive a user input for selecting information 1513 indicating a designated image aspect ratio of 9:16 among the information indicating designated image aspect ratios (1511, 1512, 1513) and the information indicating the full ratio (1520). As shown by reference numeral 1502, the processor 550 may reduce the area of the display 510 exposed to the outside so that the horizontal and vertical ratio of the display area of the display is equal to the designated image aspect ratio of 9:16 selected by user input.

At operation 1405, in an embodiment, processor 550 may obtain an image through the entire area of the image sensor.

In FIG. 14, operation 1405 is illustrated as being performed after operations 1401 and 1403 are performed, but is not limited thereto. For example, operation 1405 may be performed before operation 1401, or after operation 1401 and before operation 1403.

At operation 1407, in an embodiment, processor 550 may determine an image portion corresponding to the area of the display 510 (the display area of the display) within the image (or an image portion corresponding to the image aspect ratio selected by the user input in operation 1401).

Since operation 1407 is at least partially the same or similar to operation 605 of FIG. 6, a detailed description thereof will be omitted.

At operation 1409, in an embodiment, processor 550 may display the determined image portion through display 510.

Since operation 1409 is at least partially the same or similar to operation 607 of FIG. 6, a detailed description thereof will be omitted.

In an embodiment, as shown at reference numerals 1501 and 1502, if the area of the display 510 is expanded or reduced, the processor 550 may display the image portion (e.g., image 1530 or image 1540) determined through operation 1407 through the display area of the display so that the horizontal and vertical ratio of the display area of the display is equal to the image aspect ratio selected by the user.

According to various embodiments of the present disclosure, a method for providing an image in an electronic device 101 may comprise obtaining, based on a user input, an image through an entire area of an image sensor a camera module 520 included in the electronic device 101, identifying, through the at least one sensor (e.g., sensor 530) of the electronic device 101, an area of a flexible display of the electronic device 101 exposed to an outside of the electronic device 101, determining, within the image, a portion of the image corresponding to the area of the identified flexible display (e.g., display 510), and displaying, through the flexible display, the determined portion of the image.

According to various embodiments of the present disclosure, the user input may be include a user input for setting an image aspect ratio to a full ratio.

According to various embodiments of the present disclosure, identifying the area of the flexible display may comprise identifying a horizontal and vertical ratio of the area of the flexible display exposed to the outside.

According to various embodiments of the present disclosure, determining the portion of the image may comprise determining as the portion of the image, an area in the image, the area in the image having a same horizontal and vertical ratio as a horizontal and vertical ratio of the area of the flexible display based on a center of the image.

According to various embodiments of the present disclosure, determining the portion of the image may comprise determining as the portion of the image, an area in the image, the area in the image including a boundary line in a direction in which the flexible display is expanded or reduced based on the center of the image or in a direction opposite to the direction among boundary lines of the image, the area in the image having a same horizontal and vertical ratio as the horizontal and vertical ratio of the area of the flexible display

According to various embodiments of the present disclosure, the method may further comprise displaying, through the flexible display, the image aspect ratio corresponding to the horizontal and vertical ratio of the area of the flexible display exposed to the outside.

According to various embodiments of the present disclosure, the method may further include identifying whether the horizontal and vertical ratio of the area of the flexible display exposed to the outside is a same as an aspect ratio of one of a designated plurality of image aspect ratios, and displaying, through the flexible display, information indicating the designated plurality of image aspect ratios without displaying information indicating a full ratio if the horizontal and vertical ratio of the area of the flexible display exposed to the outside is the same as the aspect ratio of the one of the designated plurality of image aspect ratios, and wherein the one image aspect ratio is display to be distinguished from remaining image aspect ratios among the designated plurality of image aspect ratios.

In various embodiments, displaying the determined portion of the image may include cropping the determined portion of the image from the image, and display the cropped portion of the image through the flexible display.

According to various embodiments of the present disclosure, the method may include receiving a user input for selecting one image aspect ratio from among a designated plurality of image aspect ratios, and controlling such that the area of the flexible display corresponding to the selected one image aspect ratio is exposed to the outside.

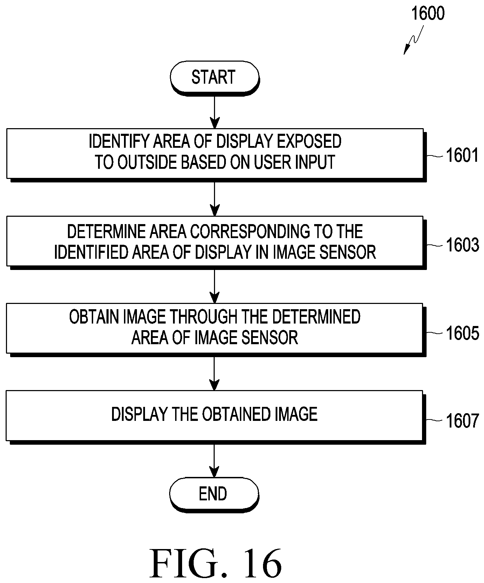

FIG. 16 is a flowchart 1600 illustrating a method of providing an image, according to various embodiments.

Referring to FIG. 16, in operation 1601, in an embodiment, the processor 550 may identify an area of the display 510 exposed to the outside (a display area of the display) through the sensor 530, based on a user input.

In an embodiment, the user input may be a user input setting the image aspect ratio to the full ratio.

In an embodiment, since the operation of identifying, by the processor 550, the area of the display 510 exposed to the outside through the sensor 530 is at least partially the same or similar to the operation 603 of FIG. 6, so detailed description thereof will be omitted.

At operation 1603, in an embodiment, the processor 550 may determine an area within the image sensor of the camera module 520, the area corresponding to the identified area of the display 510. For example, in a case that the horizontal and vertical ratio of the display area of the display is 1:1 and the image sensor has pixels of 12M (e.g., the image sensor having 4000 horizontal pixels and 3000 vertical pixels), the processor 550 may determine an area having 9M pixels (e.g., an area with 3000 pixels horizontally and 3000 pixels vertically) in the image sensor.

In operation 1605, in an embodiment, the processor 550 may obtain an image through the determined area of the image sensor (e.g., the area determined through operation 1603). For example, the image signal processor 260 or the application processor may obtain an image through the determined area of the image sensor.

In operation 1607, in an embodiment, the processor 550 may display the obtained image (e.g., the image obtained through operation 1605) through the display 510.

According to various embodiments of the present disclosure, an electronic device 101 may include a flexible display (e.g., display 510), an area of the flexible display exposed to an outside of the electronic device 101 being reduced as the flexible display is inserted into an inside of the electronic device 101, the area being expanded as the flexible display is drawn from the inside the electronic device 101, a camera module 520 including an image sensor, at least one sensor (e.g., sensor 530), and at least one processor (e.g., processor 550) electrically connected to the flexible display, the camera module, and the at least one sensor, wherein the at least one processor is configured to identify, based on a user input, the area of the flexible display exposed to the outside through the at least one sensor, determine an area corresponding to the identified area of the flexible display exposed to the outside in the image sensor, obtain an image through the determined area of the image sensor, and display, through the flexible display, the obtained image.

According to various embodiments of the present disclosure, the user input may include an user input for setting an image aspect ratio to a full ratio.

Additionally, the data structure used in the above-described embodiments of the present disclosure can be recorded on a computer-readable recording medium through various means. The computer-readable recording media includes storage media such as magnetic storage media (e.g., ROM, floppy disk, hard disk, etc.) and optical read media (e.g., CD-ROM, DVD, etc.).

So far, the present disclosure has been examined focusing on its preferred embodiments. A person skilled in the art to which the disclosure pertains will understand that the present disclosure may be implemented in a modified form without departing from the essential characteristics of the present disclosure. Therefore, the disclosed embodiments should be considered from an illustrative rather than a restrictive perspective. The scope of the present disclosure is indicated in the claims rather than the foregoing description, and all differences within the equivalent scope should be construed as being included in the present disclosure.

## Claims

1. An electronic device comprising:
a flexible display, an area of the flexible display exposed to an outside of the electronic device being reduced as the flexible display is inserted into an inside of the electronic device, the area being expanded as the flexible display is drawn to the outside of the electronic device;
a camera module including an image sensor;
at least one sensor; and
at least one processor electrically connected to the flexible display, the camera module, and the at least one sensor,
wherein the at least one processor is configured to:
obtain, based on a user input, an image through an entire area of the image sensor,
identify the area of the flexible display exposed to the outside through the at least one sensor,
determine, within the image, a portion of the image corresponding to the area of the identified flexible display, and
display, through the flexible display, the determined portion of the image.

2. The electronic device of claim 1, wherein the user input includes a user input for setting an image aspect ratio to a full ratio.

3. The electronic device of claim 2, wherein the at least one processor is configured to identify a horizontal and vertical ratio of the area of the flexible display exposed to the outside.

4. The electronic device of claim 3, wherein the at least one processor is configured to determine, as the portion of the image, an area in the image, the area in the image having a same horizontal and vertical ratio as a horizontal and vertical ratio of the area of the flexible display based on a center of the image.

5. The electronic device of claim 3, wherein the at least one processor is configured to determine, as the portion of the image, an area in the image, the area in the image including a boundary line in a direction in which the flexible display is expanded or reduced based on the center of the image or in a direction opposite to the direction among boundary lines of the image, the area in the image having a same horizontal and vertical ratio as the horizontal and vertical ratio of the area of the flexible display.

6. The electronic device of claim 3, wherein the at least one processor is configured to display, through the flexible display, an image aspect ratio corresponding to the horizontal and vertical ratio of the area of the flexible display exposed to the outside.

7. The electronic device of claim 3, wherein the at least one processor is configured to:
identify whether the horizontal and vertical ratio of the area of the flexible display exposed to the outside is a same as an aspect ratio of one of a designated plurality of image aspect ratios, and
display, through the flexible display, information indicating the designated plurality of image aspect ratios without displaying information indicating a full ratio if the horizontal and vertical ratio of the area of the flexible display exposed to the outside is the same as the aspect ratio of the one of the designated plurality of image aspect ratios, and
wherein the one image aspect ratio is display to be distinguished from remaining image aspect ratios among the designated plurality of image aspect ratios.

8. The electronic device of claim 1, wherein the at least one processor is configured to crop the determined portion of the image from the image, and display the cropped portion of the image through the flexible display.

9. The electronic device of claim 1, wherein the at least one processor is configured to:
receive a user input for selecting one image aspect ratio from among a designated plurality of image aspect ratios, and
control such that the area of the flexible display corresponding to the selected one image aspect ratio is exposed to the outside.

10. A method for providing an image in an electronic device comprises:
obtaining, based on a user input, an image through an entire area of an image sensor a camera module included in the electronic device;
identifying, through the at least one sensor of the electronic device, an area of a flexible display of the electronic device exposed to an outside of the electronic device;
determining, within the image, a portion of the image corresponding to the area of the identified flexible display; and
displaying, through the flexible display, the determined portion of the image.

11. The method of claim 10, wherein the user input includes a user input for setting an image aspect ratio to a full ratio.

12. The method of claim 11, wherein identifying the area of the flexible display comprises identifying a horizontal and vertical ratio of the area of the flexible display exposed to the outside.

13. The method of claim 12, wherein determining the portion of the image comprises determining as the portion of the image, an area in the image, the area in the image having a same horizontal and vertical ratio as a horizontal and vertical ratio of the area of the flexible display based on a center of the image.

14. The method of claim 12, wherein determining the portion of the image comprises determining as the portion of the image, an area in the image, the area in the image including a boundary line in a direction in which the flexible display is expanded or reduced based on the center of the image or in a direction opposite to the direction among boundary lines of the image, the area in the image having a same horizontal and vertical ratio as the horizontal and vertical ratio of the area of the flexible display.

15. The method of claim 12, further comprising:
displaying, through the flexible display, the image aspect ratio corresponding to the horizontal and vertical ratio of the area of the flexible display exposed to the outside.
